# EUROPEAN PATENT SPECIFICATION

(11) **EP 4 253 119 B1**
(45) Date of publication and mention of the grant of the patent: **06.11.2024**
(21) Application number: 23157429.4
(22) Date of filing: 18.02.2023
(51) Int. Cl.: B60K 17/06, B60K 5/04, B60K 1/00, B60K 5/12, F16H 57/02

(54) **SUPPORT STRUCTURE FOR ELECTRIC COMPONENT**
TRÄGERSTRUKTUR FÜR ELEKTRISCHE KOMPONENTE
STRUCTURE DE SUPPORT POUR COMPOSANT ÉLECTRIQUE

(30) Priority: 31.03.2022 JP 2022059896
(43) Date of publication of application: 04.10.2023
(73) Proprietor: Suzuki Motor Corporation, Hamamatsu-shi, Shizuoka 432-8611 (JP)
(72) Inventor: AKASAKA, Fumiya, Hamamatsu-shi, 432-8611 (JP); KISO, Tatsuya, Hamamatsu-shi, 432-8611 (JP); KATO, Hidetoshi, Hamamatsu-shi, 432-8611 (JP)
(74) Representative: Plasseraud IP

(56) References cited:
- EP-A1- 2 711 221
- EP-A1- 3 034 345
- EP-A1- 3 466 733
- JP-A- 2013 193 634
- US-A1- 2020 070 756

## Description

### [Technical Field]

The present invention relates to a support structure for an electric component, and in particular to a vehicle comprising the support structure.

### [Background Art]

Conventionally, a hybrid vehicle power plant has been known in which an inverter (electric component) is installed directly above a transaxle casing and the inverter is connected to the transaxle casing via a bracket (see WO2012/114491). An example of a fastening structure of an onboard apparatus to be fastened to a vehicle body is described in Patent Literature 2.

### [Citation List]

### [Patent Literature]

[Patent Literature 1] WO2012/114491
[Patent Literature 2] EP3034345

### [Summary of Invention]

### [Technical Problem]

However, in the conventional hybrid vehicle power plant, in a case where a distance between the inverter and the transaxle casing is long, when the transaxle is extended toward the inverter and connected to the inverter, stiffness in coupling between the inverter and the casing may be reduced, and stiffness in support of the inverter with respect to the casing may be reduced. Hence, it is difficult to curb vibration of the inverter.

The present invention has been made by focusing attention on the above circumstances, and aims to provide a support structure for an electric component that, even when a distance between the electric component installed directly above a transmission case and a transmission is long, can enhance stiffness in support of the electric component with respect to the transmission and can curb vibration of the electric component.

### [Solution to Problem]

The present invention is a vehicle as defined in claim 1.

### [Advantageous Effect of Invention]

As described above, according to the present invention, it is possible to, even when a distance between the electric component installed directly above a transmission case and a transmission is long, enhance stiffness in support of the electric component with respect to the transmission and curb vibration of the electric component.

### [Brief Description of Drawings]

[Figure 1] Figure 1 is a perspective view of an internal combustion engine and a transmission including a support structure for an electric component according to an example of the present invention.
[Figure 2] Figure 2 is a front view of the internal combustion engine and the transmission including the support structure for the electric component according to the example.
[Figure 3] Figure 3 is a left side view of the internal combustion engine and the transmission including the support structure for the electric component according to the example.
[Figure 4] Figure 4 is a top view of the internal combustion engine and the transmission including the support structure for the electric component according to the example.
[Figure 5] Figure 5 is a top view of the transmission including the support structure for the electric component according to the example, and illustrates a state where an upper bracket, an inverter, and a lower bracket are removed from the transmission.
[Figure 6] Figure 6 is a top view of the transmission including the support structure for the electric component according to the example, and illustrates a state where the upper bracket and the inverter are removed.
[Figure 7] Figure 7 is a diagram illustrating the support structure for the electric component according to the example of the present invention, and is an enlarged perspective view of a connection part of the upper bracket and a middle bracket.

### [Description of Embodiment]

A support structure for an electric component according to an embodiment of the present invention is a support structure for the electric component installed directly above a transmission case of a transmission that changes a speed of rotation of an internal combustion engine, the support structure including a first bracket connected to the electric component, and a second bracket connected to the transmission case, in which by connecting the first bracket and the second bracket, the electric component is connected to the transmission case via the first bracket and the second bracket.

With this configuration, the support structure for the electric component according to the embodiment of the present invention can, even when a distance between the electric component installed directly above a transmission case and a transmission is long, enhance stiffness in support of the electric component with respect to the transmission and curb vibration of the electric component.

### [Embodiment]

Hereinafter, a support structure for an electric component according to an example of the present invention will be described with reference to the drawings.

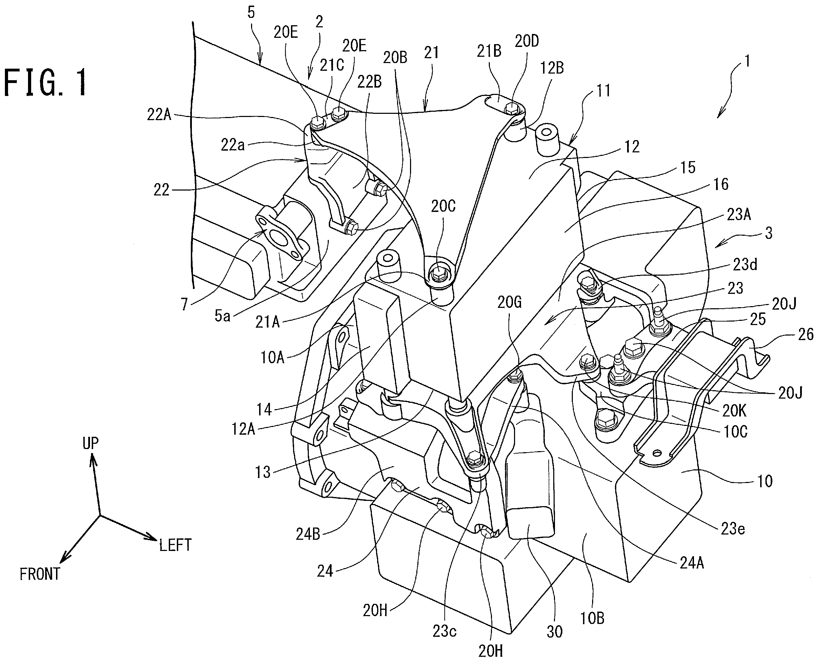

Figures 1 to 7 are diagrams illustrating the support structure for the electric component according to the example of the present invention. In Figures 1 to 7, upper and lower, front and rear, and left and right directions are based on an internal combustion engine and a transmission installed in a vehicle, and a front-rear direction of the vehicle is referred to as the front-rear direction, a left-right direction of the vehicle (width direction of vehicle) is referred to as the left-right direction, and an up-down direction of the vehicle (height direction of vehicle) is referred to as the up-down direction.

First, a configuration will be described.

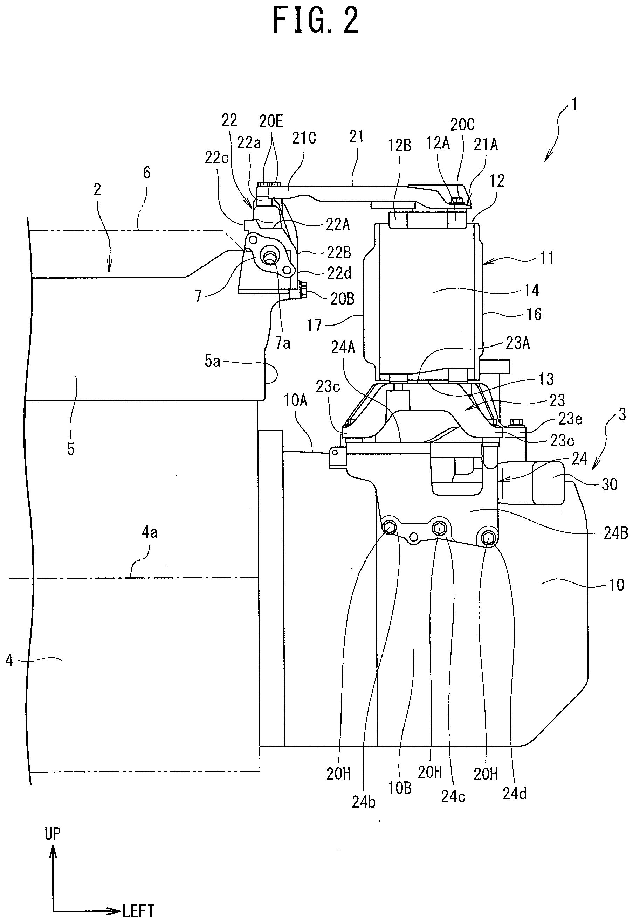

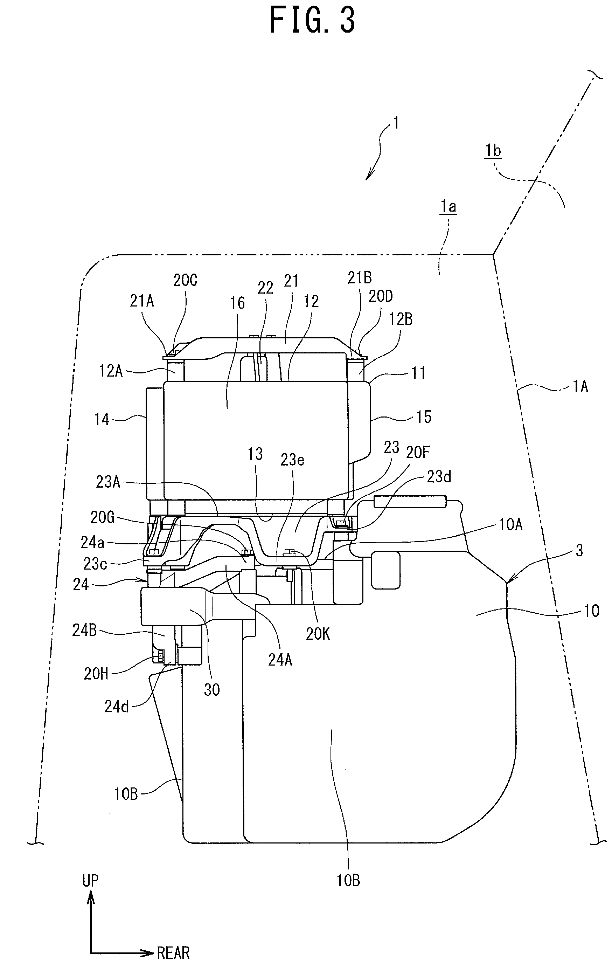

In Figures 1 and 2, an engine 2 as an internal combustion engine and a transmission 3 are installed in an engine compartment 1a of a vehicle 1 (see Figure 3). As illustrated in Figure 3, the vehicle 1 includes a dash panel 1A, the engine compartment 1a is formed in front of the dash panel 1A, and a vehicle interior 1b in which occupants including a driver ride is formed behind the dash panel 1A.

As illustrated in Figure 2, the engine 2 includes a cylinder block 4, a cylinder head 5 attached to an upper part of the cylinder block 4, a cylinder head cover 6 attached to an upper part of the cylinder head 5, and an oil pan (not illustrated) attached to a lower part of the cylinder block 4.

A crankshaft 4a is provided in the cylinder block 4, and the crankshaft 4a extends in the width direction of the vehicle (hereinafter also referred to as a vehicle width direction). The engine 2 of the present example is a transverse engine.

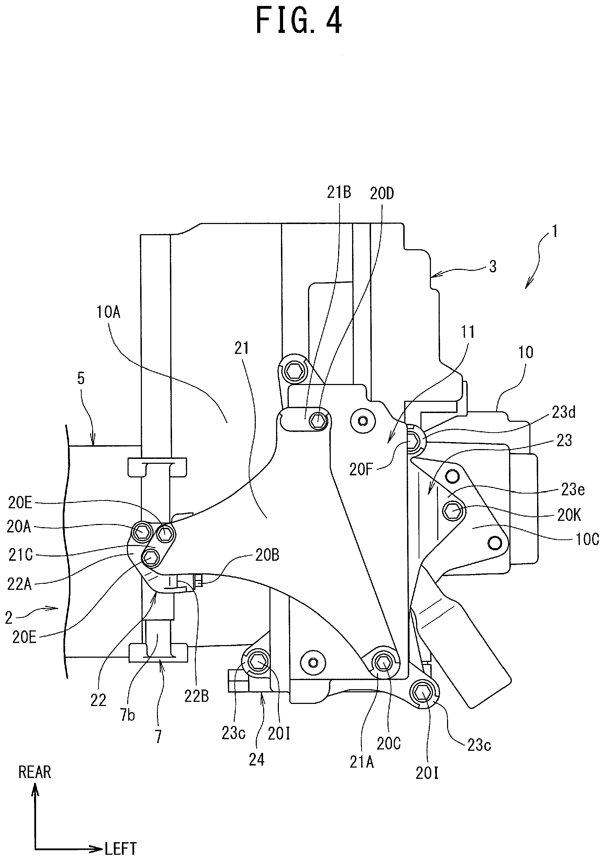

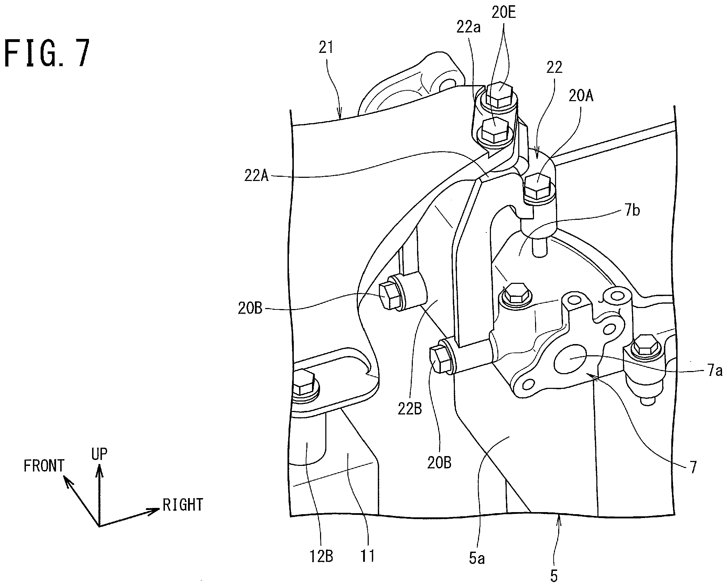

As illustrated in Figures 1 and 4, EGR piping 7 is provided in the cylinder head 5. The EGR piping 7 is provided in an upper part of the cylinder head 5 to extend in the front-rear direction of the vehicle 1, and includes therein an EGR passage 7a that allows passage of an EGR gas (see Figure 7).

An exhaust component (not illustrated) is installed on the front side of the engine 2, and the EGR gas flows into a front end part of the EGR passage 7a from the exhaust component. An intake component (not illustrated) is installed on the rear side of the engine 2, and the EGR gas discharged from a rear end part of the EGR passage 7a is discharged into the intake component.

A transmission case 10 is connected to the cylinder block 4 of the engine 2, and changes the speed of and outputs a drive force (rotation) transmitted from the crankshaft 4a.

The engine 2 and the transmission 3 are installed next to each other in the vehicle width direction, and the transmission 3 is installed in a part lower than the cylinder head 5. In other words, the engine 2 and the transmission 3 overlap in the front-rear direction.

The transmission 3 includes the transmission case 10, and a transmission mechanism, a differential device, and the like including components such as transmission gears (not illustrated) are installed in the transmission case 10.

As illustrated in Figures 1 and 4, an inverter 11 as the electric component is installed directly above the transmission case 10. The inverter 11 converts DC power supplied from a battery (not illustrated) into three-phase AC power and supplies the three-phase AC power to a motor generator, and converts three-phase AC power generated by the motor generator into DC power and charges a battery with the DC power.

As illustrated in Figure 4, the inverter 11 is installed directly above the transmission case 10 such that its longer direction is oriented in the front-rear direction of the vehicle 1 and its shorter direction is oriented in the vehicle width direction.

As illustrated in Figure 2, the inverter 11 has an upper wall 12, a lower wall 13, a front wall 14, a rear wall 15 (see Figure 1), a left wall 16, and a right wall 17.

As illustrated in Figure 1, an upper bracket 21 is connected to the upper wall 12 of the inverter 11. The upper bracket 21 is connected to the cylinder head 5 via a middle bracket 22.

In other words, the inverter 11 is connected to the cylinder head 5 via the upper bracket 21. The upper bracket 21 of the present example forms a support member.

The middle bracket 22 has a horizontal wall part 22A and a vertical wall part 22B. As illustrated in Figures 4 and 7, the horizontal wall part 22A is fastened to the EGR piping 7 in the up-down direction with a bolt 20A. Specifically, the horizontal wall part 22A is connected to a central part in the front-rear direction of an upper wall 7b of the EGR piping 7.

The vertical wall part 22B extends downward from a left end part in the vehicle width direction of the horizontal wall part 22A, and is fastened to a left side wall 5a of the cylinder head 5 in the horizontal direction with a bolt 20B (see Figures 1 and 2). The left side wall 5a of the cylinder head 5 faces the transmission 3 in the vehicle width direction.

In the present example, the upper wall 7b of the EGR piping 7 forms an upper wall of an internal combustion engine, and the left side wall 5a of the cylinder head 5 forms a side wall of the internal combustion engine.

As illustrated in Figure 4, when the transmission 3 is viewed from above, the upper bracket 21 is formed in a triangular shape and the inverter 11 is formed in a rectangular shape.

Fastening parts 21A, 21B, and 21C are provided in the three vertices of the triangular shape of the upper bracket 21, and the fastening parts 21A, 21B, and 21C are formed of bolt holes through which bolts 20C, 20D, and 20E are inserted, respectively.

As illustrated in Figure 1, fastened parts 12A and 12B are provided in a diagonally opposite front end part and rear end part of the rectangular upper wall 12 of the inverter 11.

Specifically, the fastened part 12A is provided in a left end part of the front end part of the upper wall 12, and the fastened part 12B is provided in a right end part of the rear end part of the upper wall 12 located diagonally opposite to the fastened part 12A.

The fastening part 21A of the upper bracket 21 is fastened to the fastened part 12A of the upper wall 12 of the inverter 11 with a bolt 20C, and the fastening part 21B of the upper bracket 21 is fastened to the fastened part 12B of the upper wall 12 of the inverter 11 with a bolt 20D.

As a result, the upper bracket 21 is fastened to the front end part and the rear end part of the upper wall 12 of the inverter 11 which are separated in the front-rear direction.

As illustrated in Figures 1 and 2, a fastened part 22a is provided in the horizontal wall part 22A of the middle bracket 22, and the fastening part 21C of the upper bracket 21 is fastened to the fastened part 22a of the horizontal wall part 22A of the middle bracket 22 in the up-down direction with a bolt 20E.

As illustrated in Figure 2, the fastened part 22a is provided between a right end part 22c (right end part 22c of horizontal wall part 22A) of the middle bracket 22 and a left end part 22d (left end part 22d of vertical wall part 22B) of the middle bracket 22 in the vehicle width direction.

As illustrated in Figure 1, a lower bracket 23 is connected to the lower wall 13 of the inverter 11, and the inverter 11 is connected to an upper wall 10A of the transmission case 10 by the lower bracket 23.

The lower bracket 23 of the present example forms the first bracket, and the middle bracket 22 forms a third bracket.

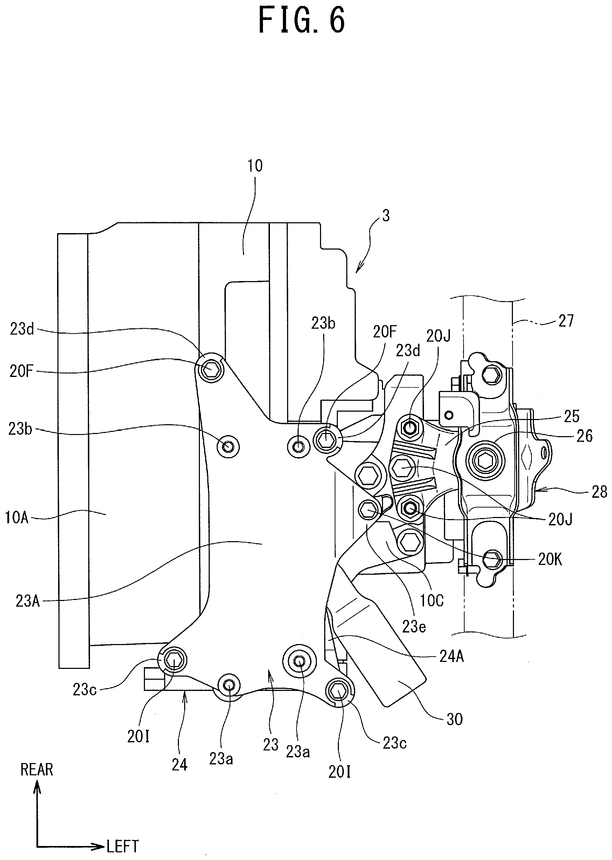

As illustrated in Figure 6, a flat-plate-shaped placement part 23A on which the inverter 11 is placed is provided in the lower bracket 23, and a pair of front fastened parts 23a and a pair of rear fastened parts 23b are provided in the placement part 23A.

The front fastened part 23a is provided in a front end part of the placement part 23A, and the rear fastened part 23b is provided in a rear end part of the placement part 23A.

A front end part of the lower wall 13 of the inverter 11 is fastened to the front fastened parts 23a with bolts (not illustrated), and a rear end part of the lower wall 13 of the inverter 11 is fastened to the rear fastened parts 23b with bolts (not illustrated).

A pair of front fastening parts 23c, a pair of rear fastening parts 23d, and a left fastening part 23e are provided in the lower bracket 23.

The front fastening part 23c is provided in a front end part of the placement part 23A and protrudes downward from the placement part 23A (see Figure 2).

The rear fastening part 23d is provided in a rear end part of the placement part 23A and protrudes downward from the placement part 23A (see Figure 3). The left fastening part 23e extends leftward and downward from a left end part of the placement part 23A to be located leftward of the left wall 16 of the inverter 11 (see Figures 1 and 3).

As illustrated in Figure 4, the left fastening part 23e, the inverter 11, and the engine 2 are installed next to one another in the vehicle width direction in the order of the left fastening part 23e, the inverter 11, and the engine 2. The left fastening part 23e of the present example forms a fastening part on one side.

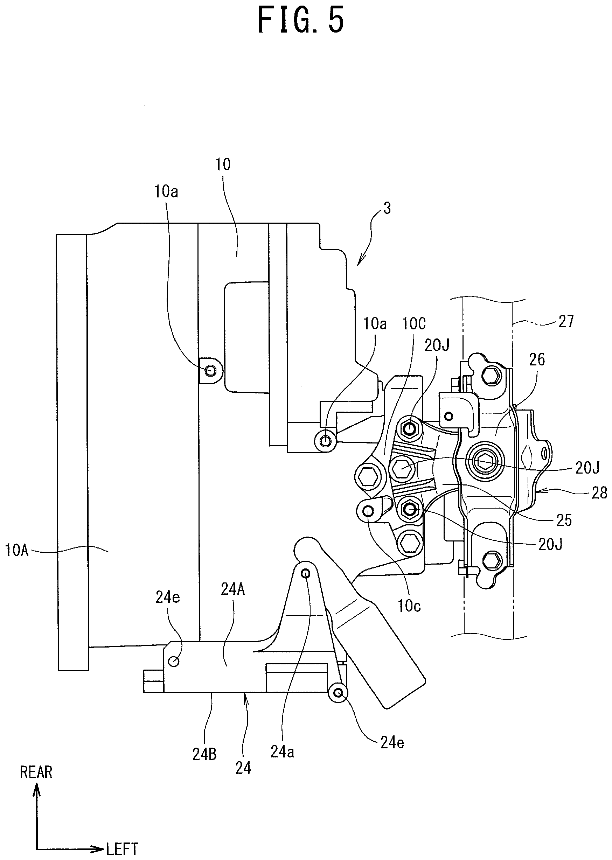

As illustrated in Figure 5, a pair of fastened parts 10a are provided in the upper wall 10A of the transmission case 10, and the rear fastening parts 23d of the lower bracket 23 are fastened to the fastened parts 10a in the up-down direction with bolts 20F (see Figure 6).

As illustrated in Figures 1 and 3, a middle bracket 24 is connected to the transmission case 10, and as illustrated in Figure 3, the middle bracket 24 includes a horizontal wall part 24A and a vertical wall part 24B.

As illustrated in Figure 5, an upper fastening part 24a is provided in the horizontal wall part 24A, and the upper fastening part 24a is fastened to the upper wall 10A of the transmission case 10 in the up-down direction with a bolt 20G (see Figure 3).

As illustrated in Figure 3, the vertical wall part 24B extends downward along a front wall 10B of the transmission case 10 from a front end part of the horizontal wall part 24A. That is, the vertical wall part 24B extends in the up-down direction along the front wall 10B of the transmission case 10. The front wall 10B of the present example forms a side wall of the transmission case.

As illustrated in Figure 2, lower fastening parts 24b, 24c, and 24d (see Figure 3) are provided in the vertical wall part 24B, and the lower fastening parts 24b, 24c, and 24d are connected to the front wall 10B of the transmission case 10 in the horizontal direction with bolts 20H.

The front fastening part 23c, rear fastening part 23d, and left fastening part 23e of the present example form a first fastening part, and the lower fastening parts 24b, 24c, and 24d form a second fastening part. Bolts 20F, 20I, and 20K form a first fastener, and a bolt 20H forms a second fastener.

As illustrated in Figure 5, a pair of fastening parts 24e are provided in the horizontal wall part 24A of the middle bracket 24, and the front fastening parts 23c of the placement part 23A are fastened to the pair of fastening parts 24e in the up-down direction with bolts 20I (see Figure 6). The middle bracket 24 of the present example forms a second bracket.

As illustrated in Figure 5, a mount attachment part 10C is provided in a left end part of the upper wall 10A of the transmission case 10.

One end part of a mount bracket 25 is fastened to the mount attachment part 10C with bolts 20J.

The other end part of the mount bracket 25 is elastically supported to a left side member 27 by an elastic body unit 26. The mount bracket 25 and the elastic body unit 26 form a mount device 28. The left side member 27 of the present example forms a vehicle body.

With this configuration, the transmission 3 is elastically supported to the left side member 27 via the mount device 28. On the other hand, the engine 2 is elastically supported to a right side member (not illustrated) by a mount device (not illustrated).

As illustrated in Figure 5, a fastening part 10c is provided in the mount attachment part 10C, and the lower fastening part 23e of the lower bracket 23 is fastened to the fastening part 10c in the up-down direction with a bolt 20K (see Figure 6).

As described above, the lower bracket 23 of the present example is connected to the upper wall 10A of the transmission case 10, the middle bracket 24, and the mount attachment part 10C, and the inverter 11 is connected to the upper wall 10A of the transmission case 10, the middle bracket 24, and the mount attachment part 10C via the lower bracket 23.

As illustrated in Figure 3, a component 30 forming a part of the transmission 3 is attached to the upper wall 10A of the transmission case 10, and the horizontal wall part 24A of the middle bracket 24 is installed in a part higher than the component 30.

In other words, the component 30 having a certain height is installed in the upper wall 10A of the transmission case 10 of the present example. For this reason, when the front side of the lower bracket 23 interferes with the component 30 and cannot connect directly with the transmission case 10, the lower bracket 23 can be connected to the middle bracket 24 to connect the inverter 11 to the transmission case 10 via the lower bracket 23 and the middle bracket 24.

Note that while functions and the like of the component 30 are not described in detail, any component may be used as long as the component is included as a part of the transmission 3.

Next, effects of the support structure for the inverter 11 of the present example will be described.

The support structure for the inverter 11 of the present example has the inverter 11 installed directly above the transmission case 10, the lower bracket 23 connected to the lower wall 13 of the inverter 11, and the middle bracket 24 connected to the transmission case 10. By connecting the lower bracket 23 and the middle bracket 24, the inverter 11 is connected to the transmission case 10 via the lower bracket 23 and the middle bracket 24.

As a result, even when the distance between the transmission case 10 and the inverter 11 is long, the inverter 11 can be connected to the transmission case 10 via the lower bracket 23 and the middle bracket 24.

For this reason, it is possible to enhance stiffness in coupling between the inverter 11 and the transmission case 10 by the lower bracket 23 and the middle bracket 24, and prevent reduction of stiffness in support of the inverter 11 with respect to the transmission case 10. As a result, it is possible to curb vibration of the inverter 11.

Additionally, even when the component 30 is installed on the upper wall 10A of the transmission case 10, the lower bracket 23 and the middle bracket 24 can prevent interference of the inverter 11 with the component 30 and also enable installation of the inverter 11 directly above the transmission case 10 to improve the degree of freedom of installation of the inverter 11.

Additionally, according to the support structure for the inverter 11 of the present example, the lower bracket 23 has the rear fastening part 23d fastened to the upper wall 10A of the transmission case 10 in the up-down direction with the bolt 20F, the front fastening part 23c fastened to the middle bracket 24 in the up-down direction with the bolt 20I, and the left fastening part 23e fastened to the mount attachment part 10C of the transmission case 10 in the up-down direction with the bolt 20K.

Additionally, the middle bracket 24 to which the lower bracket 23 is connected has the vertical wall part 24B extending in the up-down direction along the front wall 10B of the transmission case 10, and the lower fastening parts 24b, 24c, and 24d provided in the vertical wall part 24B and fastened to the front wall 10B of the transmission case 10 in the horizontal direction with the bolts 20H.

With this configuration, by connecting the lower bracket 23 to the upper wall 10A of the transmission case 10 and connecting the middle bracket 24 to the front wall 10B orthogonal to the upper wall 10A, it is possible to increase the attachment strength of the lower bracket 23 and the middle bracket 24 with respect to the transmission case 10 and enhance stiffness of the lower bracket 23 and the middle bracket 24.

For this reason, by connecting the inverter 11 to the lower bracket 23 and middle bracket 24 having high stiffness, stiffness in support of the inverter 11 can be enhanced even more, and vibration of the inverter 11 can be curbed more effectively.

Additionally, according to the support structure for the inverter 11 of the present example, the inverter 11 is fastened to the front fastened parts 23a located in the front end part of the lower bracket 23 and the rear fastened parts 23b located in the rear end part of the lower bracket 23.

The lower bracket 23 is fastened to the transmission case 10 via the front fastening parts 23c located in the front end part of the transmission case 10, the rear fastening parts 23d located in the rear end part of the transmission case 10, and the left fastening part 23e located on the left side of the inverter 11, and the left fastening part 23e, the inverter 11, and the engine 2 are installed next to one another in the vehicle width direction in the order of the left fastening part 23e, the inverter 11, and the engine 2.

With this configuration, it is possible to connect the lower bracket 23 to which the inverter 11 is connected with the transmission case 10 in a wider range than the area of the lower wall 13 of the inverter 11, and enhance stiffness in support of the inverter 11 with respect to the transmission case 10 even more.

Additionally, since the lower bracket 23 is connected with the transmission case 10 in a longer range than the length in the vehicle width direction of the lower wall 13 of the inverter 11, it is possible to curb vibration of the inverter 11 in the vehicle width direction more effectively.

Additionally, according to the support structure for the inverter 11 of the present example, the transmission case 10 has the mount attachment part 10C.

The mount attachment part 10C is connected to the mount bracket 25 that connects the transmission 3 to the left side member 27, and the left fastening part 23e is fastened to the mount attachment part 10C.

The mount attachment part 10C has the mount bracket 25 fastened and connected thereto, and therefore has high stiffness. By providing the fastening part 10c in the mount attachment part 10C and connecting the lower bracket 23 to the fastening part 10c, the attachment strength of the lower bracket 23 can be increased. For this reason, it is possible to enhance stiffness in support of the inverter 11 with respect to the transmission case 10 even more.

Additionally, since the fastening part 10c farthest away from the engine 2 in the vehicle width direction is installed in the mount attachment part 10C having high stiffness and the lower bracket 23 is connected to the fastening part 10c, the attachment strength in the vehicle width direction of the lower bracket 23 with respect to the transmission case 10 can be increased. For this reason, it is possible to curb vibration of the inverter 11 in the vehicle width direction more effectively.

Additionally, according to the support structure for the inverter 11 of the present example, the inverter 11 is installed directly above the transmission 3 such that its longer direction is oriented in the front-rear direction of the vehicle 1 and its shorter direction is oriented in the vehicle width direction, and is arranged next to the engine 2 in the vehicle width direction.

Moreover, the support structure for the inverter 11 of the present example has the upper bracket 21 connected to the upper wall 12 of the inverter 11 and the engine 2, and the inverter 11 is connected to the engine 2 via the upper bracket 21.

With this configuration, the upper wall 12 of the inverter 11 can be reinforced by the upper bracket 21 and also be supported by the upper bracket 21, so that vibration of the upper wall 12 of the inverter 11 can be curbed.

Additionally, since the inverter 11 is installed directly above the transmission 3 such that its longer direction is oriented in the front-rear direction of the vehicle 1 and its shorter direction is oriented in the vehicle width direction, vibration in the vehicle width direction is weaker than vibration in the front-rear direction.

According to the support structure for the inverter 11 of the present example, the inverter 11 is installed next to the engine 2 in the vehicle width direction such that its longer direction is oriented in the front-rear direction and its shorter direction is oriented in the vehicle width direction, and the inverter 11 is connected to the engine 2 via the upper bracket 21. Hence, it is possible to curb vibration of the inverter 11 in the vehicle width direction.

Moreover, by connecting the inverter 11 and the engine 2 by the upper bracket 21, it is possible to connect a vibration system including the engine 2 and a vibration system including the transmission 3 by the upper bracket 21.

For this reason, it is possible to enhance stiffness in support of the inverter 11 with respect to the engine 2 to combine the vibration systems, and curb vibration of the inverter 11 in the front-rear direction and the vehicle width direction.

As described above, the support structure for the inverter 11 of the present example can enhance stiffness in support of the inverter 11 installed directly above the transmission case 10 and can curb vibration of the inverter 11.

Additionally, the support structure for the inverter 11 of the present example has the middle bracket 22 connected to the upper wall 7b of the EGR piping 7 and the left side wall 5a of the cylinder head 5 facing the transmission 3 in the vehicle width direction.

The upper bracket 21 is connected to the middle bracket 22, and the inverter 11 is connected to the engine 2 via the upper bracket 21 and the middle bracket 22.

With this configuration, it is possible to connect the middle bracket 22 to two surfaces of the upper wall 7b of the EGR piping 7 and the left side wall 5a of the cylinder head 5 orthogonal to the upper wall 7b of the EGR piping 7, to increase the attachment strength of the middle bracket 22 to the cylinder head 5 and enhance stiffness of the middle bracket 22.

For this reason, by connecting the upper bracket 21 to the middle bracket 22 having high stiffness, it is possible to enhance stiffness in support of the inverter 11 with respect to the engine 2 even more, and curb vibration of the inverter 11 more effectively.

Moreover, while the shape of the upper bracket 21 may become complex when the upper bracket 21 is directly connected to the EGR piping 7, by connecting the upper bracket 21 to the EGR piping 7 and the cylinder head 5 via the middle bracket 22, it is possible to simplify the shape of the upper bracket 21.

While an example of the present invention has been disclosed, it is clear that a person skilled in the art can make modifications without departing from the scope of the present invention as defined in the appended claims.

### [Reference Signs List]

1...vehicle, 2...engine (internal combustion engine), 3...transmission, 5a...left side wall (side wall of internal combustion engine), 7b...upper wall (upper wall of internal combustion engine), 10...transmission case, 10A...upper wall (upper wall of transmission case), 10C...mount attachment part, 11...inverter (electric component), 20F, 20I, 20K...bolt (first fastener), 20H...bolt (second fastener), 21...upper bracket (support member), 22...middle bracket (third bracket), 23...lower bracket (first bracket), 23a...front fastened part, 23b...rear fastened part, 23c...front fastening part (first fastening part), 23d...rear fastening part (first fastening part), 23e...left fastening part (first fastening part, fastening part on one side), 24...middle bracket (second bracket), 24A...horizontal wall part, 24B...vertical wall part, 24b, 24c, 24d...lower fastening part (second fastening part), 25...mount bracket, 27...left side member (vehicle body)

## Claims

1. A vehicle (1) comprising:
an internal combustion engine (2);
a transmission (3) having a transmission case (10) connected to the internal combustion engine (2);
an electric component (11), and
a support structure configured to support the electric component (11) with respect to the transmission (3);
**characterized in that** the support structure comprises:
a first bracket (23) connected to the electric component (11), and
a second bracket (24) connected to the transmission case (10) and disposed between the first bracket (23) and the transmission case (10),
the first bracket (23) being connected to the second bracket (24) and supporting the electric component (11) directly above the transmission case (10) with a predetermined distance maintained between the bottom of the electric component (11) and the transmission case (10).

2. The vehicle as claimed in claim 1, wherein
the first bracket (23) has a first fastening part (23c, 23d, 23e) fastened to an upper wall (10A) of the transmission case (10) and the second bracket (24) in an up-down direction with a first fastener (20F, 20I, 20K), and
the second bracket (24) has a vertical wall part (24B) extending in the up-down direction along a side wall (10B) of the transmission case (10), and a second fastening part (24b, 24c, 24d) provided in the vertical wall part (24B) and fastened to the side wall (10B) of the transmission case (10) in a horizontal direction with a second fastener (20H).

3. The vehicle as claimed in claim 1 or 2, wherein
the electric component (11) is fastened to a front fastened part (23a) provided in a front end part of the first bracket (23) and a rear fastened part (23b) provided in a rear end part of the first bracket (23);
the first bracket (23) is fastened to the transmission (3) via a front fastening part (23c) provided in a front end part of the first bracket (23), a rear fastening part (23d) provided in a rear end part of the first bracket (23), and a fastening part on one side (23e) provided in the first bracket (23) to be located on one side in a vehicle width direction with respect to the electric component (11); and
the fastening part on one side (23e), the electric component (11), and the internal combustion engine (2) are installed next to one another in the vehicle width direction in the order of the fastening part on one side (23e), the electric component (11), and the internal combustion engine (2).

4. The vehicle as claimed in claim 3, wherein
a mount attachment part (10C) is provided in an upper wall (10A) of the transmission (3);
the mount attachment part (10C) is connected to a mount bracket (25) that connects the transmission (3) to a vehicle body (27); and
the fastening part on one side (23e) is fastened to the mount attachment part (10C).

5. The vehicle as claimed in any one of claims 1 to 4, wherein
the transmission (3) is connected to the internal combustion engine (2) next to the internal combustion engine (2) in the vehicle width direction;
the electric component (11) is installed next to the internal combustion engine (2) in the vehicle width direction such that a longer direction of the electric component (11) is oriented in a vehicle front-rear direction and a shorter direction of the electric component (11) is oriented in the vehicle width direction;
the support structure for the electric component (11) comprises a support member (21) connected to an upper wall (12) of the electric component (11) and the internal combustion engine (2); and
the electric component (11) is connected to the internal combustion engine (2) via the support member (21).

6. The vehicle as claimed in claim 5, further comprising a third bracket (22) connected to an upper wall (7b) and a side wall (5a) of the internal combustion engine (2), wherein
the support member (21) is connected to the third bracket (22), and
the electric component (11) is connected to the internal combustion engine (2) via the support member (21) and the third bracket (22).

## Patentansprüche

1. Fahrzeug (1), umfassend:
einen Verbrennungsmotor (2);
ein Getriebe (3), welches ein Getriebegehäuse (10) aufweist, welches mit dem Verbrennungsmotor (2) verbunden ist;
eine elektrische Komponente (11), und
eine Stützstruktur, welche dazu eingerichtet ist, die elektrische Komponente (11) in Bezug auf das Getriebe (3) zu stützen;
**dadurch gekennzeichnet, dass** die Stützstruktur umfasst:
eine erste Halterung (23), welche mit der elektrischen Komponente (11) verbunden ist, und
eine zweite Halterung (24), welche mit dem Getriebegehäuse (10) verbunden und zwischen der ersten Halterung (23) und dem Getriebegehäuse (10) angeordnet ist,
wobei die erste Halterung (23) mit der zweiten Halterung (24) verbunden ist und die elektrische Komponente (11) direkt über dem Getriebegehäuse (10) mit einem vorbestimmten Abstand stützt, welcher zwischen dem Unterteil der elektrischen Komponente (11) und dem Getriebegehäuse (10) beibehalten ist.

2. Fahrzeug nach Anspruch 1, wobei
die erste Halterung (23) einen ersten Befestigungsabschnitt (23c, 23d, 23e) aufweist, welcher an einer oberen Wand (10A) des Getriebegehäuses (10) und an der zweiten Halterung (24) in einer Oben-nach-Unten Richtung mit einer ersten Befestigung (20F, 201, 20K) befestigt ist, und
die zweite Halterung (24) einen vertikalen Wandabschnitt (24B), welcher sich in der Oben-nach-Unten Richtung entlang einer Seitenwand (10B) des Getriebegehäuses (10) erstreckt, und einen zweiten Befestigungsabschnitt (24b, 24c, 24d) aufweist, welcher in dem vertikalen Wandabschnitt (24B) bereitgestellt und an der Seitenwand (10B) des Getriebegehäuses (10) in einer horizontalen Richtung mit einer zweiten Befestigung (20H) befestigt ist.

3. Fahrzeug nach Anspruch 1 oder 2, wobei
die elektrische Komponente (11) an einem vorderen befestigten Abschnitt (23a), welcher in einem vorderen Endabschnitt der ersten Halterung (23) bereitgestellt ist, und an einem hinteren befestigten Abschnitt (23b) befestigt ist, welcher in einem hinteren Endabschnitt der ersten Halterung (23) bereitgestellt ist;
die erste Halterung (23) an dem Getriebe (3) durch einen vorderen Befestigungsabschnitt (23c), welcher in einem vorderen Endabschnitt der ersten Halterung (23) bereitgestellt ist, durch einen hinteren Befestigungsabschnitt (23d), welcher in einem hinteren Endabschnitt der ersten Halterung (23) bereitgestellt ist, und durch einen Befestigungsabschnitt an einer Seite (23e) befestigt ist, welcher in der ersten Halterung (23) bereitgestellt ist, um an einer Seite in einer Fahrzeugbreitenrichtung in Bezug auf die elektrische Komponente (11) angeordnet zu sein; und
der Befestigungsabschnitt an einer Seite (23e), die elektrische Komponente (11) und der Verbrennungsmotor (2) nebeneinander in der Fahrzeugbreitenrichtung in der Reihenfolge des Befestigungsabschnitts an einer Seite (23e), der elektrischen Komponente (11) und des Verbrennungsmotors (2) installiert sind.

4. Fahrzeug nach Anspruch 3, wobei
ein Montagebefestigungsabschnitt (10C) in einer oberen Wand (10A) des Getriebes (3) bereitgestellt ist;
der Montagebefestigungsabschnitt (10C) mit einer Montagehalterung (25) verbunden ist, welche das Getriebe (3) mit einem Fahrzeugkörper (27) verbindet; und
der Befestigungsabschnitt an einer Seite (23e) an dem Montagebefestigungsabschnitt (10C) befestigt ist.

5. Fahrzeug nach einem der Ansprüche 1 bis 4, wobei
das Getriebe (3) mit dem Verbrennungsmotor (2) neben dem Verbrennungsmotor (2) in der Fahrzeugbreitenrichtung verbunden ist;
die elektrische Komponente (11) neben dem Verbrennungsmotor (2) in der Fahrzeugbreitenrichtung derart installiert ist, dass eine längere Richtung der elektrischen Komponente (11) in einer Vorne-nach-Hinten Richtung des Fahrzeugs orientiert und eine kürzere Richtung der elektrischen Komponente (11) in der Fahrzeugbreitenrichtung orientiert ist;
die Stützstruktur für die elektrische Komponente (11) ein Stützelement (21) umfasst, welches mit einer oberen Wand (12) der elektrischen Komponente (11) und dem Verbrennungsmotor (2) verbunden ist; und
die elektrische Komponente (11) mit dem Verbrennungsmotor (2) durch das Stützelement (21) verbunden ist.

6. Fahrzeug nach Anspruch 5, ferner umfassend eine dritte Halterung (22), welche mit einer oberen Wand (7b) und einer Seitenwand (5a) des Verbrennungsmotors (2) verbunden ist, wobei das Stützelement (21) mit der dritten Halterung (22) verbunden ist, und die elektrische Komponente (11) mit dem Verbrennungsmotor (2) durch das Stützelement (21) und die dritte Halterung (22) verbunden ist.

## Revendications

1. Véhicule (1) comprenant :
un moteur à combustion interne (2) ;
une transmission (3) présentant un carter de transmission (10) relié au moteur à combustion interne (2) ;
un composant électrique (11), et
une structure de support configurée pour supporter le composant électrique (11) par rapport à la transmission (3) ;
**caractérisé en ce que** la structure de support comprend :
un premier support (23) relié au composant électrique (11), et
un deuxième support (24) relié au carter de transmission (10) et disposé entre le premier support (23) et le carter de transmission (10),
le premier support (23) étant relié au deuxième support (24) et supportant le composant électrique (11) directement au-dessus du carter de transmission (10) avec une distance prédéterminée maintenue entre la partie inférieure du composant électrique (11) et le carter de transmission (10).

2. Véhicule selon la revendication 1, dans lequel
le premier support (23) comporte une première partie de fixation (23c, 23d, 23e) fixée à une paroi supérieure (10A) du carter de transmission (10) et au deuxième support (24) dans une direction haut-bas avec un premier élément de fixation (20F, 201, 20K) et
le deuxième support (24) comporte une partie de paroi verticale (24B) s'étendant dans la direction haut-bas le long d'une paroi latérale (10B) du carter de transmission (10), et une seconde partie de fixation (24b, 24c, 24d) prévue dans la partie de paroi verticale (24B) et fixée à la paroi latérale (10B) du carter de transmission (10) dans une direction horizontale avec un second élément de fixation (20H).

3. Véhicule selon la revendication 1 ou 2, dans lequel
le composant électrique (11) est fixé à une partie fixée avant (23a) prévue dans une partie d'extrémité avant du premier support (23) et une partie fixée arrière (23b) prévue dans une partie d'extrémité arrière du premier support (23) ;
le premier support (23) est fixé à la transmission (3) par l'intermédiaire d'une partie de fixation avant (23c) prévue dans une partie d'extrémité avant du premier support (23), une partie de fixation arrière (23d) prévue dans une partie d'extrémité arrière du premier support (23), et une partie de fixation sur un côté (23e) prévue dans le premier support (23) qui doit être située sur un côté dans une direction de largeur de véhicule par rapport au composant électrique (11) ; et
la partie de fixation sur un côté (23e), le composant électrique (11), et le moteur à combustion interne (2) sont installés l'un à coté de l'autre dans la direction de largeur de véhicule l'ordre partie de fixation d'un côté (23e), composant électrique (11), et moteur à combustion interne (2).

4. Véhicule selon la revendication 3, dans lequel
une partie d'attache de montage (10C) est prévue dans une paroi supérieure (10A) de la transmission (3) ;
la partie d'attache de montage (10C) est reliée à un support de montage (25) qui relie la transmission (3) à une carrosserie de véhicule (27) ; et
la partie de fixation sur un côté (23e) est fixée à la partie d'attache de montage (10C).

5. Véhicule selon l'une quelconque des revendications 1 à 4, dans lequel
la transmission (3) est reliée au moteur de combustion interne (2) à côté du moteur à combustion interne (2) dans la direction de largeur de véhicule ;
le composant électrique (11) est installé à côté du moteur à combustion interne (2) dans la direction de largeur de véhicule de telle sorte qu'une direction plus longue du composant électrique (11) est orientée dans une direction avant-arrière de véhicule et une direction plus courte du composant électrique (11) est orienté dans la direction de largeur de véhicule ;
la structure de support pour le composant électrique (11) comprend un élément de support (21) relié à une paroi supérieure (12) du composant électrique (11) et au moteur à combustion interne (2) ; et
le composant électrique (11) est relié au moteur à combustion interne (2) par l'intermédiaire de l'élément de support (21).

6. Véhicule selon la revendication 5, comprenant en outre un troisième support (22) relié à une paroi supérieure (7b) et à une paroi latérale (5a) du moteur à combustion interne (2), dans lequel l'élément de support (21) est relié au troisième support (22), et
le composant électrique (11) est relié au moteur à combustion interne (2) par l'intermédiaire de l'élément de support (21) et du troisième support (22).
